Europäisches Patentamt

European Patent Office

Office européen des brevets

(19)

(11) Veröffentlichungsnummer: **0 173 884**
**B1**

(12) **EUROPÄISCHE PATENTSCHRIFT**

(45) Veröffentlichungstag der Patentschrift:
23.11.89

(51) Int. Cl.⁴: **G06F 12/12**

(21) Anmeldenummer: **85110034.7**

(22) Anmeldetag: **09.08.85**

(54) Schaltungsanordnung zur prioritätsbezogenen Einordnung und Registrierung einzelner Speicherabschnitte bzw. Bänke unter Anwendung des LRU-Algorithmus.

(30) Priorität: **10.08.84 DE 3429594**

(43) Veröffentlichungstag der Anmeldung:
**12.03.86 Patentblatt 86/11**

(45) Bekanntmachung des Hinweises auf die Patenterteilung:
**23.11.89 Patentblatt 89/47**

(84) Benannte Vertragsstaaten:
**AT BE CH DE FR GB IT LI NL SE**

(56) Entgegenhaltungen:
**US-A- 3 958 228**
**US-A- 3 967 247**

**IBM TECHNICAL DISCLOSURE BULLETIN, Band 19, Nr. 1, Juni 1976, Seiten 321-325, New York, US; K. MARUYAMA: "Implementation of the stack operation circuit for LRU algorithm"**

(73) Patentinhaber: **Siemens Aktiengesellschaft, Wittelsbacherplatz 2, D-8000 München 2(DE)**

(72) Erfinder: **Nussbächer, Hans Klaus, Dipl.-Ing., Strassbergerstrasse 12, D-8000 München 40(DE)**

**Beschreibung**

Die Erfindung bezieht sich auf eine Schaltungsanordnung zur prioritätsbezogenen Einordnung und Registrierung einzelner Speicherabschnitte bzw. Bänke einer Speicheranordnung nach dem Oberbegriff des Patentanspruchs 1.

In modernen Datenverarbeitungsanlagen der oberen Leistungsklasse spielt die Vergabe von Prioritäten für die Abarbeitung der üblicherweise in ungeordneter Reihenfolge auftretenden Ereignisse eine wichtige Rolle. In Anpassung an die verschiedenen Anwendungsfälle ist eine Reihe von Algorithmen entwickelt worden, mit denen die jeweils gewünschte Prioritätsfolge erreicht werden kann. Einer dieser bekannten Algorithmen ist der sogenannte FIFO-Algorithmus (First In, First Out), bei dem die wartenden Ereignisse in der Reihenfolge ihres Auftretens berücksichtigt werden, so daß das zeitlich zuerst eintreffende Signal höchste Priorität erhält. Beim sogenannten LIFO-Algorithmus (Last In, First Out) erhält dagegen das zeitlich jüngste Ereignis die höchste Priorität. Diese bekannten Prioritätsregeln haben die Eigenschaft, daß neu auftretende Ereignisse die bisherige Prioritätsreihenfolge nur nach unten oder oben erweitern, innerhalb der einmal bestehenden Reihenfolge jedoch keine Veränderungen hervorrufen. Die genannten Algorithmen – FIFO und LIFO – sind daher verhältnismäßig einfach zu realisieren.

Komplizierter ist dagegen der sogenannte LRU-Algorithmus (Least Recently Used), er hat jedoch den Vorteil, daß er eine bessere Auslastung der Speicheranordnung gewährleistet. Bei Anwendung dieses LRU-Algorithmus erhält z.B. derjenige Speicherbereich die niedrigste Priorität, zu dem am längsten nicht mehr zugegriffen worden ist. Umgekehrt besitzt das zeitlich jüngste Ereignis höchste Priorität. Dazwischen kommt es zu einer laufenden Änderung der Prioritätsfolge, und zwar bei jedem neu auftretenden Ereignis, es sei denn, der Zugriff erfolgt zu einem Speicherabschnitt, der bereits die höchste Priorität besitzt. Hatte dagegen das zeitlich jüngste Ereignis vor seinem Auftreten eine niedrige Rangstufe innerhalb der Prioritätsfolge, dann bedeutet dies für alle bisher prioritätsmäßig davorliegenden Ereignisse eine Rückstufung um jeweils eine Stelle. Diese dynamische Umordnung der Prioritäten erfordert zwangsläufig einen erheblichen Hardware-Aufwand.

Aus der Vielzahl bekannter Lösungen sei stellvertretend das aus "IBM Technical Disclosure Bulletin", Band 19, Nr. 1, Juni 1976, Seiten 321 bis 325 bekannte Verfahren näher erläutert. In einem Stapel, der mit Positionsnummern versehen ist, wird entsprechend der Anzahl der Speicherbänke für jede Bank ein eindeutiger Code geführt. Bei jedem erfolgreichen Zugriff zum Speicher wird für jede Positionsnummer der Bankcode geändert, wobei diejenige Bank, zu der gerade zugegriffen worden ist, um eine Positionsnummer im Stapel sinkt. So erscheint immer an höchster Stapelposition (niedrigste Priorität) diejenige Bank, zu der am längsten nicht zugegriffen worden ist. Diese Bank wird dann nach einem erfolglosen Zugriff zum Speicher auch zum Überschreiben mit neuen Informationen aus einem nachgeschalteten Hintergrundspeicher oder dergleichen angeboten. Neben dem beträchtlichen Hardware-Aufwand ergeben sich sowohl bei dieser bekannten Lösung als auch bei anderen bekannten LRU-Verfahren erhebliche und deshalb im allgemeinen unerwünschte Laufzeitprobleme.

Der vorliegenden Erfindung liegt deshalb die Aufgabe zugrunde, eine Schaltungsanordnung der eingangs genannten Art in der Weise zu verbessern, daß sie gegenüber bekannten Lösungen kürzere Laufzeiten und deshalb eine raschere Umordnung der einzelnen Prioritäten innerhalb der Prioritätsfolge ermöglicht.

Die Lösung dieser Aufgabe ergibt sich erfindungsgemäß durch die kennzeichnenden Merkmale des Anspruchs 1.

Vorteilhafte Weiterbildungen der Erfindung sind in den Unteransprüchen angegeben.

Ein Ausführungsbeispiel der Erfindung wird im folgenden anhand der Zeichnung näher erläutert. Dabei zeigen:

FIG 1 eine Schaltungsanordnung gemäß der Erfindung,
FIG 2 ein Beispiel für eine Miss-Logikschaltung in einer Schaltungsanordnung nach FIG 1,
FIG 3 ein Beispiel für eine Hit-Logikschaltung in einer Schaltungsanordnung nach FIG 1,
FIG 4 eine Schaltung zur Überwachung der Schaltungsanordnung nach FIG 1 hinsichtlich möglicher Prioritätenfehler.

Wie bereits erwähnt, wählt der LRU-Ersetzungsalgorithmus bei erfolglosem Zugriff zum Speicher (z.B. bei Lesen MISS) die bisher am längsten nicht benutzte Speicherbank aus, um dort neue Daten im Austausch gegen bisher gespeicherte Daten einzuschreiben. Bei einem der Einfachheit halber gewähltem Beispiel mit vier Speicherbänken soll im folgenden der Ersetzungs-/Vertauschungsalgorithmus näher erläutert werden. Selbstverständlich ist dieses Prinzip auf jede beliebige Anzahl von Bänken oder Registern anwendbar. Um jeder der vier Bänke A, B, C, D eine eindeutige Priorität zuzuordnen, sind maximal zwei Prioritätsbits mit den Bitkombinationen 00, 01, 10, 11 erforderlich, wobei z.B. 00 die niedrigste und 11 die höchste Priorität bedeuten.

Von einer beliebigen Zuordnung der Prioritäten zum Zeitpunkt $t_m$ ausgehend, soll nun gemäß dem in der nachfolgenden Tabelle I gezeigten Beispiel bei einem erfolgreichen Zugriff zum Speicher (z.B. bei Lesen HIT) zu einem gegenüber $t_m$ jüngeren Zeitpunkt $t_n$ die Bank A die höchste Priorität, d.h. die Priorität 11 erhalten.

| Tabelle I | | | |
|---|---|---|---|
| Bank | Prioritäten zum Zeitpunkt | | |
| | $t_m$ (alt) | | $t_n$ (neu) |
| A | 01 (HIT) | — | 11 |
| B | 10 | — | 01 |
| C | 11 | — | 10 |
| D | 00 | | 00 |

Alle übrigen Bänke, die bisher hinsichtlich ihrer Prioritäten vor der Bank A lagen, erhalten deshalb eine neue Priorität. Dies gilt im vorliegenden Beispiel für die Bänke C und B, die jeweils um eine Stufe nach unten rücken, während die Bank D unverändert die letzte Priorität behält. Dieses dynamische Umordnen innerhalb der Prioritätsfolge hat im sogenannten Hit-Fall lediglich den Zweck, den jeweiligen Prioritätszustand nach Art einer Buchführung fortlaufend zu aktualisieren. Seine eigentliche Bedeutung erlangt dieses jeweils aktuelle Vertauschungsergebnis erst bei Lesen MISS, wobei gemäß dem LRU-Algorithmus neue Daten stets in diejenige Bank geschrieben werden, zu der am längsten nicht zugegriffen worden ist und die demzufolge die niedrigste Priorität besitzt.

Die für die Realisierung der erfindungsgemäßen Schaltungsanordnung maßgeblichen Kriterien und die Erzeugung neuer Zugriffskriterien sind in der nachfolgenden Tabelle II zusammengestellt. Wesentlich für diese Kriterien ist dabei, daß sie unabhängig von einer strengen Zuordnung eines erfolgreichen Speicherzugriffs (HIT) zu einer bestimmten Speicherbank sind. Dabei genügt die allgemeine und leicht auszuwertende Information, ob bei der Bank i oder bei irgendeiner der übrigen Bänke überhaupt ein Hit eingetreten ist.

## Tabelle II

| Veränderungs-möglichkeit der Prioritäten | | Hit bei der Bank? (bezogen auf die alte Priorität) | Zusatzkriterium: Hit bei einer Bank mit der alten Priorität |
|---|---|---|---|
| $t_m$ (alt) | $t_n$ (neu) | | |
| 11 ⟹ | 11 | ja | |
| | 10 | nein | |
| 10 ⟸ | 11 | ja | |
| | 10 | nein | 11 |
| | 01 | nein | ≠ 11 |
| 01 ⟸ | 11 | ja | |
| | 01 | nein | ≠ 00 |
| | 00 | nein | 00 |
| 00 ⟹ | 11 | ja | |
| | 00 | nein | |
| Y X | Y X | | |

Wie die Tabelle II zeigt, sind bei der Bank mit der zweithöchsten und zweitniedrigsten Priorität jeweils drei neue Prioritäten möglich, wobei für den Fall, daß der Hit bei einer fremden Bank auftritt, zwei verschiedene Prioritäten in Betracht kommen können, während für den Fall, daß HIT bei der eigenen Bank auftritt, nur die eine Priorität 11 zutrifft. Beispielsweise gibt es für die Bank mit der alten Priorität 10 entweder den Fall, daß die Priorität 10 erhalten bleibt, weil der erfolgreiche Zugriff bei einer Bank mit höherer Priorität stattgefunden hat, oder die alte Priorität geht um eine Stelle zurück, weil der Hit bei einer Bank mit vergleichsweise niedrigerer Priorität aufgetreten ist. Um diese beiden Fälle eindeutig voneinander zu unterscheiden, ist ein Zusatzkriterium (siehe Tabelle II, 3.Spalte) erforderlich, das darüber Auskunft gibt, ob der Hit bei einer Bank mit höchster oder mit nicht höchster Priorität aufgetreten ist. Bei der

3

Bank mit zweitniedrigster Priorität 01 gilt ein anderes Zusatzkriterium nämlich die Aussage, ob der Hit bei einer Bank mit niedrigster oder mit nicht niedrigster Priorität aufgetreten ist.

Das in der Tabelle II dargestellte Beispiel für vier Speicherbänke ist im Prinzip auch auf acht oder sechzehn Bänke anwendbar, wobei lediglich zusätzliche Prioritätsbits hinzukommen. Hinsichtlich der beiden niederwertigsten Bits YX ergeben sich nämlich immer gleichartige Vierergruppen 11, 10, 01, 00 nach Tabelle II mit den gleichen Abfragekriterien, so daß zusätzlich nur noch geprüft werden muß, ob das dritt- und vierthöchste Prioritätsbit "0" oder "1" beträgt.

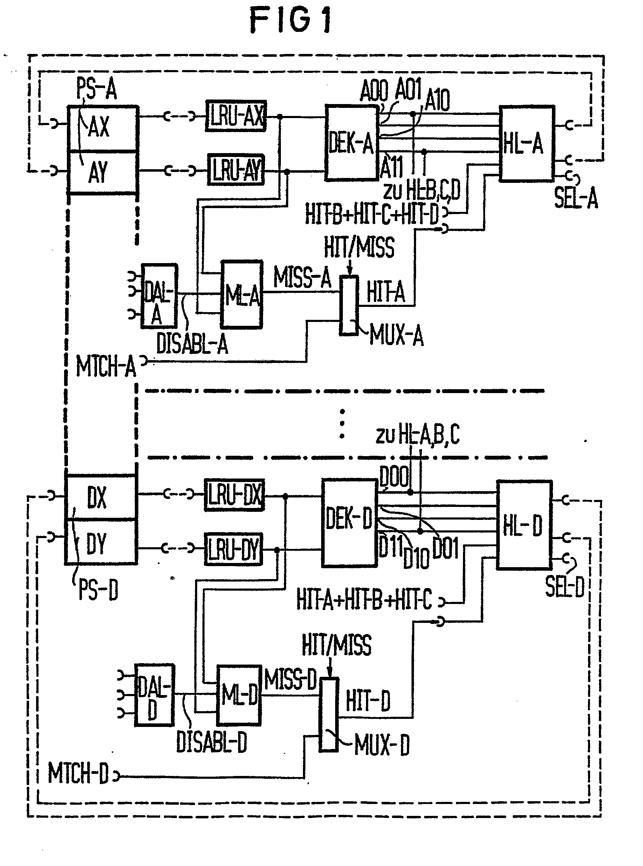

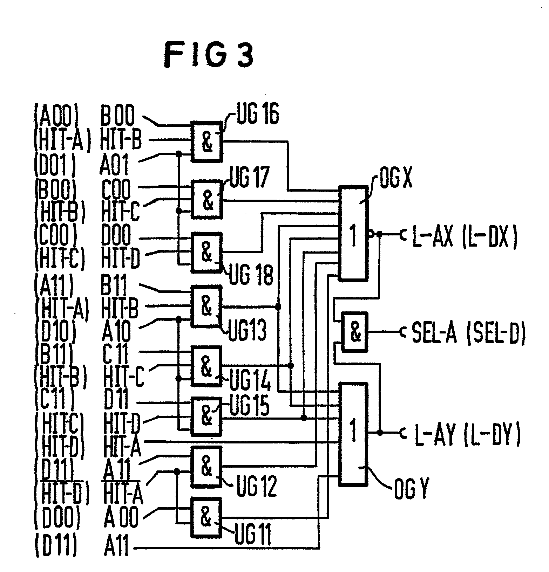

Eine den Kriterien nach Tabelle II gerecht werdende Schaltungsanordnung ist in FIG 1 dargestellt. Diese jeweils einer Speicherbank zugeordnete Steuer-/Vertauschungslogik für die Realisierung der LRU-Algorithmus-Funktion ist ein und ausgangsseitig mit je einem bankbezogenen Prioritätsspeicher PS-A, ..., PS-D verbunden. Den Eingang der Schaltung bilden zwei Prioritätsregister LRU-AX, LRU-AY, die beispielsweise durch ein sogenanntes Master-Slave-Flipflop realisiert sind. Anstelle eines Master-Slave-Flipflops können aus Gründen der Laufzeitdynamik auch zwei D-Flipflops verwendet werden, damit die Schaltung nicht zu schwingen beginnt. Die beiden Prioritätsregister LRU-AX, LRU-AY, ..., LRU-DX, LRU-DY, sind ausgangsseitig mit den Eingängen einer jeweils bankbezogenen Miss-Logikschaltung ML-A, ..., ML-D verbunden, deren weitere Eingänge mit dem Fehlzugriffssignal MISS und mit in den Miss-Logikschaltungen der jeweils anderen drei Speicherbänke auftretenden Zwischenprioritätssignalen beschaltet sind. Der Ausgang der Miss-Logikschaltung, an dem jeweils ein bankbezogenes Fehlzugriffs-Signal MISS-A, ..., MISS-D auftritt, ist an je einen ersten Eingang je eines Multiplexers MUX-A, ..., MUX-D geführt, dessen zweiter Eingang jeweils mit einem bankspezifischen, prozessorseitigen Treffersignal MTCH-A, ..., MTCH-D beschaltet ist und dessen Ausgang einmal direkt und einmal invertiert mit je einem Eingang der jeweils bankbezogenen Hit-Logikschaltung HL-A, ..., HL-D verbunden ist. Die Ausgänge der beiden Prioritätsregister sind außerdem mit den Eingängen je einer bankbezogenen Decodierstufe DEK-A, ..., DEK-D verbunden, deren vier, jeweils unterschiedlichen Prioritätswerten zugeordnete Ausgänge A00, A01, A10, A11, ..., D00, D01, D10, D11 mit weiteren Eingängen der jeweils bankbezogenen Hit- Logikschaltung verbunden sind. Schließlich werden der jeweils bankbezogenen Hit-Logikschaltung, z.B. HL-A,auch die Hit-Signale HIT-B, HIT-C, HIT-D der drei anderen Speicherbänke, die an den entsprechenden Multiplexer- Ausgängen auftreten, zugeführt. Die an den Ausgängen der jeweils bankbezogenen Hit-Logikschaltung HL-A, ..., HL-D auftretenden jeweils aktualisierten Prioritätsbits werden schließlich wieder in den jeweils zugehörigen Prioritätsspeicher PS-A, ..., PS-D zurückgeschrieben. über je eine einfache UND-Verknüpfung werden diese aktualisierten Prioritätsbits außerdem daraufhin abgefragt, ob es sich im jeweiligen Fall um die höchste Priorität handelt, die dann am jeweiligen Signal-Ausgang SEL-A, ..., SEL-D angezeigt wird. (Siehe auch FIG 3).

Solange in irgendeiner der vier Pufferbänke ein Hit auftritt, kommt im wesentlichen nur der Signalweg über die Decodierstufe zur Hit-Logik in Betracht, die für eine schnelle Umsortierung der einzelnen Prioritäten innerhalb der Prioritätenfolge zu sorgen hat. Über den Multiplexer MUX-A, ..., MUX-D wird jeweils nur das prozessorseitige Treffersignal MTCH-A, ..., MTCH-D eingeschleust, so daß die jeweilige Miss-Logikschaltung nicht in Aktion treten kann. Diese Miss-Logikschaltung wird erst bei erfolglosem Zugriff zum Speicher, d.h. bei Lesen MISS tätig.

Die Miss-Logikschaltung kann im Vergleich zur Hit- Logikschaltung relativ längsam arbeiten, weil im Miss- Fall aufgrund der Tatsache, daß erst neue Daten aus dem Hintergrundspeicher herangeschafft werden müssen, relativ viel Zeit zur Verfügung steht, um die Bank mit der niedrigsten Priorität zu finden und auszuwählen.

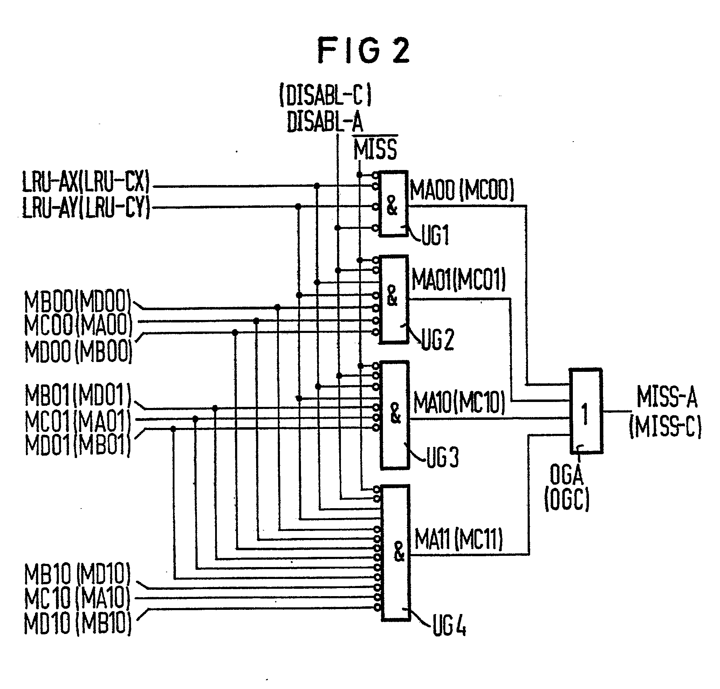

Einzelheiten einer Miss-Logikschaltung zur Verwendung in einer Schaltungsanordnung nach FIG 1 sind in FIG 2 dargestellt. Die jeweils bankbezogene Miss-Logikschal tung besteht aus vier, jeweils einem der vier Zwischenprioritätssignale MA00, MA01, MA10, MA11 zugeordneten, ausgangsseitig über ein ODER-Glied miteinander verknüpften UND-Gliedern UG1, UG2, UG3 und UG4. Jedem der vier UND-Glieder werden die beiden Prioritätsbits LRU-AX, LRU-AY zugeführt, wobei die jeweiligen Eingänge in den einzelnen UND-Gliedern entsprechend den vier verschiedenen Prioritätswerten unterschiedlich geschaltet sind. An je einen Eingang der vier UND-Glieder ist jeweils das bei einem Fehlzugriff zum Speicher auftretende Fehlerzugriffssignal MISS zugeführt. Weitere Eingänge der den zweitniedrigsten und höchsten Zwischenprioritätssignalen MA01 und MA11 zugeordneten UND-Glieder UG2 und UG4 sind mit den Ausgängen der den niederwertigsten Zwischenprioritätssignalen MB00, MC00, MD00 zugeordneten UND-Glieder der den jeweils drei anderen Speicherbänken zugeordneten Miss-Logikschaltungen verbunden. In analoger Weise sind je drei Eingänge der den zweithöchsten und höchsten Zwischenprioritätssignalen zugeordneten UND-Glieder UG3 und UG4 mit den Ausgängen der den zweitniedrigsten Zwischenprioritätssignalen MB01, MC01, MD01 zugeordneten UND-Glieder der jeweils drei anderen Speicherbänken zugeordneten Miss- Logikschaltungen verbunden. Schließlich sind drei weitere Eingänge des dem höchsten Zwischenprioritätssignal MA11 zugeordneten UND-Gliedes UG4 mit den Ausgängen der den zweithöchsten Zwischenprioritätssignalen MB01, MC01, MD01 zugeordneten UND-Glieder aus den Miss-Logikschaltungen der anderen drei Pufferspeicherbänke verbunden. Jeder Miss-Logikschaltung ist eine eventuelle Zugriffsbeschränkungen zur jeweiligen Speicherbank signalisierende Sperrschaltung DAL-A, ..., DAL-D (siehe FIG 1) vorgeschaltet, deren Ausgang DISABL-A mit je einem Eingang der vier UND-Glieder der zugehörigen Miss-Logikschaltung verbunden ist. Auf diese Weise können eine oder ggf. mehrere Speicherbänke vom LRU-Ersetzungsalgorithmus abgetrennt werden, mit der Folge, daß diese Bänke dann gegen einen unerwünschten Datenaustausch geschützt sind. Die Miss-Logikschaltungen für die übrigen Speicherbänke sind analog aufgebaut, wobei die in der FIG 2 in Klammern angegebenen Bezugszeichen beispielsweise für die Speicherbank C gelten.

Das in FIG 3 für eine Hit-Logikschaltung dargestellte Beispiel zeigt insgesamt acht UND-Glieder UG11...UG18, deren Ausgänge über zwei ODER-Glieder OGX, OGY miteinander verknüpft sind. Dabei sind zwei erste UND-Glieder UG11, UG12 über je einen ersten Eingang mit dem nieder- bzw. höchstwertigen Ausgang A00 bzw. A11 der bankbezogenen Dekodierstufe DEK-A und über je einen zweiten Eingang mit dem negierten Ausgang $\overline{\text{HIT-A}}$ des der bankbezogenen Miss-Logikschaltung ML-A nachgeschalteten Multiplexers MUX-A verbunden. Ferner sind drei zweite UND-Glieder UG13, UG14, UG15 über ihre jeweils ersten Eingänge mit dem zweithöchsten Ausgang A10 der Dekodierstufe und über ihre jeweils zweiten und dritten Eingänge mit dem jeweils höchstwertigen Ausgang B11, C11, D11 der jeweils den drei anderen Speicherbänken zugeordneten Dekodierstufen und mit den jeweils diesen Speicherbänken zugeordneten Multiplexerausgängen HIT-B, HIT-C, HIT-D verbunden. Schließlich sind drei dritte UND-Glieder UG16, UG17, UG18 über ihre jeweils ersten Eingänge mit dem zweitniedrigsten Ausgang A01 der bankbezogenen Dekodierstufe und über ihre jeweils zweiten und dritten Eingänge mit dem jeweils niederwertigsten Ausgang B00, C00, D00 der jeweils einer der drei anderen Speicherbänke zugeordneten Dekodierstufen und mit den jeweils diesen Speicherbänken zugeordneten Multiplexer-Ausgängen HIT-B, HIT-C, HIT-D verbunden. Ausgangsseitig sind alle UND-Glieder UG11, ..., UG18 mit den Eingängen eines ersten ODER-Gliedes OGX verbunden, dessen negierter Ausgang dem niederwertigsten Prioritätsbit L-AX zugeordnet ist, während die Ausgänge der drei zweiten UND-Glieder UG13, UG14, UG15 zusammen mit dem Ausgang HIT-A des bankbezogenen Multiplexers und mit dem höchstwertigen Ausgang A11 der bankbezogenen Dekodierstufe mit je einem Eingang eines zweiten ODER- Gliedes OGY verbunden sind, dessen Ausgang dem höchstwertigsten Prioritätsbit L-AY zugeordnet ist. Die Hit-Logikschaltungen für die jeweils anderen drei Speicherbänke sind in analoger Weise aufgebaut, wobei die in der FIG 3 in Klammern gesetzten Bezugszeichen beispielsweise für die Hit-Logikschaltung der Bank D gelten. Die in FIG 3 dargestellte Schaltung ist mit insgesamt zwei Stufen sehr laufzeitsparend aufgebaut. In LSI-Technik besteht sie eigentlich nur aus einer Nutzstufe, weil die z.B. als ODER-Glieder ausgebildeten Ausgangstreiber prinzipiell erforderlich sind.

Mit der in FIG 3 dargestellten Schaltung stellt sich der Hit-Fall am Beispiel der Bank A wie folgt dar. Ungeachtet des im Prioritätsspeicher PS-A enthaltenen Prioritätsbitmusters wirkt das über den Multiplexer MUX-A zugeführte prozessorseitige Treffersignal MTCH-A $\triangleq$ 1 als Hit-Signal HIT-A $\triangleq$ 1 (siehe FIG 1) direkt auf die Hit-Logikschaltung HL-A ein. Dieses Signal liegt direkt am Ausgang des zweiten ODER-Gliedes OGY an und erzwingt dort das Prioritätssignal L-AY $\triangleq$ 1. Gleichzeitig werden alle UND-Glieder UG11...UG18 gesperrt, weil im Fall der UND-Glieder UG11 und UG12 eingangsseitig $\overline{\text{HIT-A}}$ $\triangleq$ $\overline{1}$ $\triangleq$ 0 anliegt und weil bei den übrigen UND-Gliedern UG13 bis UG18 die HIT-Signale HIT-B, HIT-C, HIT-D der anderen Bänke anliegen, die, da HIT-A $\triangleq$ 1, zwangsweise "0" sein müssen. Damit ergibt sich an allen Eingängen des ersten ODER-Gliedes OGX der Wert "0" und folglich am invertierten Ausgang das Prioritätssignal L-AX $\triangleq$ 1. Die Priorität der Speicherbank A wird demnach im HIT-Fall, unabhängig von der alten Priorität, auf die höchste Prioritätsstufe "11" gesetzt.

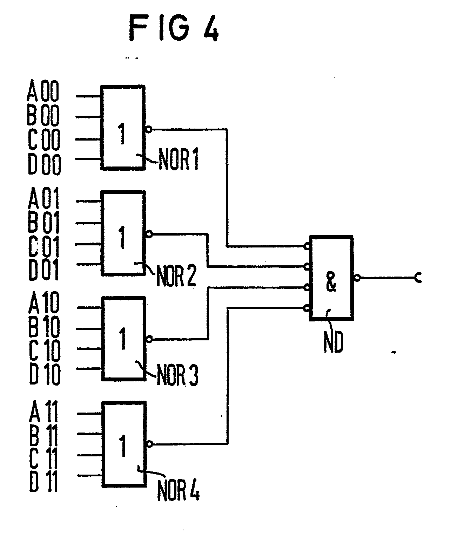

Damit mögliche Prioritätenfehler, die z.B. im Prioritätsspeicher oder im Prioritätsregister auftreten können, leicht und schnell erkannt werden können, ist zusätzlich eine spezielle Fehlerüberwachungsschaltung vorgesehen, deren Einzelheiten aus FIG 4 ersichtlich sind. Diese Fehlerüberwachungsschaltung besteht aus vier NOR-Gliedern, NOR-1, 2, 3, 4, deren Eingängen jeweils die vier niederwertigsten Ausgänge A00, B00, C00, D00, die vier zweitniedrigsten Ausgänge A01, B01, C01, D01, die vier zweithöchsten Ausgänge A10, B10, C10, D10 und die vier höchstwertigen Ausgänge A11, B11, C11, D11 aus den vier Dekodierstufen der einzelnen Speicherbänke zugeführt sind. Die negierten Ausgänge der NOR-Glieder sind jeweils mit einem negierten Eingang eines NAND-Gliedes ND verbunden, an dessen negiertem Ausgang das Fehlersignal abgegriffen werden kann.

## Patentansprüche

1. Schaltungsanordnung zur prioritätsbezogenen Einordnung und Registrierung einzelner Speicherabschnitte bzw. Bänke einer Speicheranordnung, unter Verwendung von den einzelnen Speicherabschnitten bzw. Bänken zugeordneten Prioritätsdaten, die in einem Prioritätsspeicher bereitgestellt sind, mit Hit- und Miss-Logikschaltungen zur Auswertung bzw. Erzeugung von Treffer (Hit)- und/oder Fehlzugriffs (Miss)-Signalen, sowie unter Anwendung eines LRU-Ersetzungsalgorithmus derart, daß bei erfolgreichem Zugriff zu einer Bank deren Priorität an die erste Stelle rückt und bisher in der Priorität vor dieser Bank liegende andere Bänke um jeweils eine Stelle nach unten rücken und daß bei vollem Speicher und erfolglosem Zugriff eine Einspeicherung weiterer Daten jeweils in denjenigen Speicherabschnitt erfolgt, zu dessen Daten am längsten kein Zugriff stattgefunden hat, wobei dann die Priorität dieses Speicherabschnitts von der letzten Stelle an die erste Stelle rückt, **dadurch gekennzeichnet,** daß die jeweils einer von vier Speicherbänken zugeordneten Prioritätsspeicher (PS-A, ..., PS-D) bzw. die jeweils nachgeschalteten Prioritätsregister (LRU-AX, LRU-AY, ..., LRU-DX, LRU-DY) ausgangsseitig mit den Eingängen einer jeweils bankbezogenen Miss-Logikschaltung (ML-A, ..., ML-D) verbunden sind, deren weitere Eingänge mit dem Fehlzugriffs-Signal (MISS) und mit den in den Miss-Logikschaltungen der jeweils anderen drei Speicherbänke auftretenden, niederwertigsten (MB00, MC00, MD00, ... ), zweitniedrigsten (MB01, MC01, MD01 ...) und zweithöchsten Zwischenprioritätssignalen (MB10, MC10, MD10 ...) dieser drei Speicherbänke beschaltet sind, daß die Zwischenprioritätssignale aller vier Miss-Logik-Schaltungen über je ein ODER-Glied (OGA) zu je einem Fehlzugriffs-Signal (MISS-A, ..., MISS-D) verknüpft sind, daß jedes der vier Fehlzugriffs-Signale (MISS-A, ..., MISS-D) an je einen ersten Eingang je eines Multiplexers (MUX-A, ..., MUX-D) geführt ist, dessen zweiter Eingang jeweils mit einem bankspezifischen, prozessorseitigen Treffersignal (MTCH-A, ..., MTCH-D) beschaltet ist und dessen Ausgang einmal direkt (Hit-A, ..., HIT-D) und einmal invertiert (HIT-A, ..., Hit-D) mit je einem Eingang der jeweils bankbezogenen Hit-Logikschaltung (HL-A ..., HL-D) verbunden ist, daß die Ausgänge der jeweils zwei Prioritätsbits enthaltenden Prioritätsregister (LRU-AX, LRU-AY, ..., LRU-DX, LRU-DY) mit den Eingängen je einer bankbezogenen Decodierstufe (DEK-A, ..., DEK-D) verbunden sind, deren vier, jeweils unterschiedlichen Prioritätswerten zugeordnete Ausgänge (A00, A01, A10, A11, ..., D00, D01, D10, D11) mit weiteren Eingängen der jeweils bankbezogenen Hit-Logikschaltung (HL-A ..., HL-D) verbunden sind, daß weitere Eingänge dieser Hit-Logikschaltungen (HL-A, ..., HL-D) mit den den jeweils nieder- und höchstwertigen Prioritätswerten zugeordneten Ausgängen (B00, C00, D00, B11, C11, D11, ..., A00, B00, C00, A11, B11, C11) der Decodierstufen (DEK-B, C, D, ..., DEK-A, B, C) der jeweils drei anderen Speicherbänke und mit den Ausgängen (HIT-B, HIT-C, HIT-D, ..., HIT-A, HIT-B, HIT-C) der den Miss-Logikschaltungen (ML-B, ML-C, ML-D, ..., ML-A, ML-B, ML-C) der jeweils drei anderen Speicherbänke nachgeschalteten Multiplexer (MUX-A, ..., MUX-D) verbunden sind und daß die beiden Prioritätsbit-Ausgänge (L-AX, L-AY, ..., L-DX, L-DY) jeder Hit-Logikschaltung (HL-A, ..., HL-D) mit den Eingängen der zugehörigen Prioritätsspeicher PS-A, ..., PS-D) verbunden sind.

2. Schaltungsanordnung nach Anspruch 1, **dadurch gekennzeichnet,** daß die jeweils bankbezogene Miss-Logikschaltung aus vier, jeweils eines der vier Zwischenprioritätssignale (MA00, MA01, MA10, MA11) erzeugenden, ausgangsseitig über genanntes ODER-Glied (OGA) miteinander verknüpften UND-Gliedern (UG1, UG2, UG3, UG4) besteht,

daß jeder der bei jedem UND-Glied jeweils den beiden Prioritätsbits (LRU-AX, LRU-AY) zugeordneten Eingänge entsprechend den vier verschiedenen Prioritätswerten nicht invertiert oder invertiert geschaltet ist,

daß an je einen Eingang der vier UND-Glieder (UG1, 2, 3, 4) jeweils das bei einem Fehlzugriff zum Speicher auftretende Fehlzugriffssignal (MISS) zugeführt ist,

daß weitere Eingänge der die zweitniedrigsten und höchsten Zwischenprioritätssignale (MA01, MA11) erzeugenden UND-Glieder (UG2, (G4) mit den Ausgängen der die niederwertigsten Zwischenprioritätssignale (MB00, MC00, MD00) erzeugenden UND-Glieder der den jeweils drei anderen Speicherbänken zugeordneten Miss-Logikschaltungen (ML-B, ML-C, ML-D) verbunden sind,

daß weitere Eingänge der die zweithöchsten und höchsten Zwischenprioritätssignale (MA10, MA11) erzeugenden UND-Glieder (UG3, UG4) mit den Ausgängen der die zweitniedrigsten Zwischenprioritätssignale (MN01, MC01, MD01) erzeugenden UND-Glieder der den jeweils drei anderen Speicherbänken zugeordneten Miss-Logikschaltungen verbunden sind,

und daß weitere Eingänge des das höchste Zwischenprioritätssignal (MA11) erzeugenden UND-Gliedes (UG4) mit den Ausgängen der die zweithöchsten Zwischenprioritätssignale (MB10, MC10, MD10) erzeugenden UND-Glieder der den jeweils drei anderen Speicherbänken zugeordneten Miss-Logikschaltungen verbunden sind.

3. Schaltungsanordnung nach Anspruch 2, **dadurch gekennzeichnet,** daß jeder Miss-Logikschaltung (ML-A, ..., ML-D) je eine, eventuelle Zugriffsbeschränkungen (DISABL-A, ..., DISABL-D) signalisierende Sperrschaltung (DAL-A, ..., DAL-D) vorgeschaltet ist.

4. Schaltungsanordnung nach Aspruch 3, **dadurch gekennzeichnet,** daß der Ausgang (DISABL-A) der Sperrschaltung mit je einem Eingang der vier UND- Glieder (UG1, 2, 3, 4) der zugehörigen Miss-Logikschaltung (ML-A) verbunden ist.

5. Schaltungsanordnung nach einem der vorhergehenden Ansprüche, **dadurch gekennzeichnet,** daß die jeweils einer Speicherbank zugeordnete Hit- Logikschaltung eingangsseitig aus mehreren UND-Gliedern (UG11, ..., UG18) besteht, daß zwei erste UND-Glieder (UG11, UG12), über je einen ersten Eingang mit dem nieder-(A00) bzw. höchstwertigen Ausgang (A11) der bankbezogenen Dekodierstufe (DEK-A) und über je einen zweiten Eingang mit dem negierten Ausgang (HIT-A) des der bankbezogenen Miss-Logikschaltung (ML-A) nachgeschalteten Multiplexers (MUX-A) verbunden sind, daß drei zweite UND-Glieder (UG13, UG14, UG15) über ihre jeweils ersten Eingänge mit dem zweithöchsten Ausgang (A10) der Dekodierstufe und über ihre jeweils zweiten bzw. dritten Eingänge mit dem jeweils höchstwertigen Ausgang (B11, C11, D11) der jeweils einer der drei anderen Speicherbänke zugeordneten Dekodierstufen bzw. mit den jeweils diesen Speicherbänken zugeordneten Multiplexerausgängen (HIT-B, HIT-C, HIT-D) verbunden sind, daß drei dritte UND-Glieder (UG16, UG17, UG18) über ihre jeweils ersten Eingänge mit dem zweitniedrigsten Ausgang (A01) der bankbezogenen Dekodierstufe und über ihre jeweils zweiten bzw. dritten Eingänge mit dem jeweils niederwertigsten Ausgang (B00, C00, D00) der jeweils einer der drei anderen Speicherbänke zugeordneten Dekodierstufen bzw. mit den jeweils diesen Speicherbänken zugeordneten Multiplexer-Ausgängen (HIT-B, HIT-C, HIT-D) verbunden sind, daß die Ausgänge aller UND-Glieder (UG11, ..., UG18) mit den Eingängen eines ersten ODER-Gliedes (OGX) verbunden sind, dessen negierter Ausgang dem niederwertigsten Prioritätsbit (LA-X) zugeordnet ist, und daß die Ausgänge der drei zweiten UND-Glieder (UG13, UG14, UG15) zusammen mit dem Ausgang (HIT-A) des bankbezogenen Multiplexers und mit dem höchstwertigen Ausgang (A11) der bankbezogenen Dekodierstufe mit je einem Eingang eines zweiten ODER-Gliedes (OGY) verbunden sind, dessen Ausgang dem höchstwertigen Prioritätsbit (L-AY) zugeordnet ist.

6. Schaltungsanordnung nach einem der vorhergehenden Ansprüche, **dadurch gekennzeichnet**, daß die jeweils vier niederwertigsten Ausgänge (A00, B00, C00, D00) der vier Decodierstufen, die vier zweitniedrigsten (A01, B01, C01, D01), die vier zweithöchsten (A10, B10, C10 D10) und die vier höchstwertigen Ausgänge (A11, B11, C11, D11) mit den Eingängen je eines NOR-Gliedes (NOR1, 2, 3, 4) verbunden sind, deren Ausgänge über ein NAND-Glied (ND) miteinander verknüpft sind.

## Claims

1. Circuit arrangement for classifying in order of priority and for recording individual memory sections or banks of a memory arrangement, using priority data which are provided in a priority memory and are associated with the individual memory sections or banks, having hit and miss logic circuits for evaluating or generating hit and/or miss signals, as well as using an LRU replacement algorithm in such a manner that in the case of successful access to a bank, its priority moves up to first place, and other banks previously with their priority in front of this bank each move downwards one place, and that in the case of a full memory and unsuccessful access, further data are in each case stored in that memory section whose data have not been accessed for the longest period of time, whereupon the priority of this memory section then moves up to the first place from the last place, characterized in that on the output side the priority memories (PS-A, ..., PS-D) associated in each case with one of four memory banks, or the priority registers (LRU-AX, LRU-AY, ..., LRU-DX, LRU-DY) downstream in each case are connected to the inputs of an in each case bank-related miss logic circuit (ML-A, ..., ML-D), the further inputs of which receive the miss signal (MISS) and the lowest-order (MB00, MC00, MD00, ...), second-lowest (MB01, MC01, MD01 ...) and second-highest intermediate priority signals (MB10, MC10, MD10 ...) of these three memory banks which occur in the miss logic circuits of the respective other three memory banks, in that the intermediate priority signals of all four miss logic circuits are logically combined by in each case one OR element (OGA) to form in each case one miss signal (MISS-A, ..., MISS-D), in that each of the four miss signals (MISS-A, ..., MISS-D) is fed in each case to a first input of in each case one multiplexer (MUX-A, ..., MUX-D), the second input of which in each case receives a bank-specific, processor-side hit signal (MTCH-A, ..., MTCH-D), and the output of which is connected in one case directly (HIT-A, ..., HIT-D) and in one case inverted ($\overline{\text{HIT-A}}$, ..., $\overline{\text{HIT-D}}$) to in each case one input of the respective bank-related hit logic circuit (HL-A, ..., HL-D), in that the outputs of the priority registers (LRU-AX, LRU-AY, ..., LRU-DX, LRU-DY) containing in each case two priority bits are connected to the inputs of in each case one bank-related decoding stage (DEK-A, ..., DEK-D), the four outputs (A00, A01, A10, A11, ..., D00, D01, D10, D11) of which associated in each case with different priority values are connected to further inputs of the respective bank-related hit logic circuit (HL-A, ..., HL-D), in that further inputs of these hit logic circuits (HL-A, ..., HL-D) are connected to the outputs (B00, C00, D00, B11, C11, D11, ..., A00, B00, C00, A11, B11, C11), associated with the respective lowest-order and highest-order priority values, of the decoding stages (DEK-B, C, D, ..., DEK-A, B, C) of the respective three other memory banks and to the outputs (HIT-B, HIT-C, HIT-D, ..., HIT-A, HIT-B, HIT-C) of the multiplexers (MUX-A, ..., MUX-D) in each case downstream of the miss logic circuits (ML-B, ML-C, ML-D, ..., ML-A, ML-B, ML-C) of the three other memory banks, and in that the two priority bit outputs (L-AX, L-AY, ..., L-DX, L-DY) of each hit logic circuit (HL-A, ..., HL-D) are connected to the inputs of the associated priority memories (PS-A, ..., PS-D).

2. Circuit arrangement according to Claim 1, characterized in that the in each case bank-related miss logic circuit consists of four AND elements (UG1, UG2, UG3, UG4) which in each case generate one of the four intermediate priority signals (MA00, MA01, MA10, MA11) and are logically combined on the output side via said OR element (OGA), in that each of the inputs associated in each case with the two priority bits (LRU-AX, LRU-AY) for each AND element is switched non-inverted or inverted in accordance with the four different priority values, in that the miss signal (MISS) occurring when there is an unsuccessful access to the memory is supplied in each case to one input each of the four AND elements (UG1, 2, 3, 4), in that further inputs of the AND elements (UG2, UG4) generating the second-lowest and highest intermediate priority signals (MA01, MA11) are connected to the outputs of the AND elements, generating the lowest-value intermediate priority signals (MB00, MC00, MD00), of the miss logic circuits (ML-B, ML-C, ML-D) associated with the respective three other memory banks, in that further inputs of the AND elements (UG3, UG4) generating the second-highest and highest intermediate priority signals (MA10, MA11) are connected to the outputs of the AND elements, generating the second-lowest intermediate priority signals (MB01, MC01, MD01), of the miss logic circuits associated with the respective three other memory banks, and in that further inputs of the AND element (UG4) generating the highest intermediate priority signal (MA11) are connected to the outputs of the AND elements, generating the second-highest intermediate priority signals (MB10, MC10, MD10), of the miss logic circuits associated with the respective three other memory banks.

3. Circuit arrangement according to Claim 2, characterized in that upstream of each miss logic circuit (ML-A, ..., ML-D) there is a disable circuit (DAL-A, ..., DAL-D), signalling possible access restrictions (DISABL-A, ..., DISABL-D).

4. Circuit arrangement according to Claim 3, characterized in that the output (DISABL-A) of the disable circuit is connected to one input each of the four AND elements (UG1, 2, 3, 4) of the associated miss logic circuit (ML-A).

5. Circuit arrangement according to one of the preceding claims, characterized in that the hit logic circuit associated in each case with a memory bank consists on the input side of a plurality of AND elements (UG11, ..., UG18), in that two first AND elements (UG11, UG12) are connected via in each case a first input to the lowest-order (A00) or highest-order output (A11) of the bank-related decoding stage (DEK-A), and connected via in each case a second input to the negated output (HIT-A) of the multiplexer (MUX-A) downstream of the bank-related miss logic circuit (ML-A), in that three second AND elements (UG13, UG14, UG15) are connected via their in each case first inputs to the second-highest output (A10) of the decoding stage, and via their in each case second or third inputs to the respective highest-order output (B11, C11, D11) of the decoding stages associated in each case with one of the three other memory banks, or to the multiplexer outputs (HIT-B, HIT-C, HIT-D) associated in each case with these memory banks, respectively, in that three third AND elements (UG16, UG17, UG18) are connected via their in each case first inputs to the second-lowest output (A01) of the bank-related decoding stage, and via their in each case second or third inputs to the in each case lowest-order output (B00, C00, D00) of the decoding stage associated in each case with one of the three other memory banks or to the multiplexer outputs (HIT-B, HIT-C, HIT-D) associated in each case with these memory banks, respectively, in that the outputs of all AND elements (UG11, ..., UG18) are connected to the inputs of a first OR element (OGX), the negated output of which is associated with the lowest-order priority bit (LA-X), and in that the outputs of the three second AND elements (UG13, UG14, UG15), together with the output (HIT-A) of the bank-related multiplexer and with the highest-order output (A11) of the bank-related decoding stage, are connected to one input each of a second OR element (OGY), the output of which is associated with the highest-order priority bit (L-AY).

6. Circuit arrangement according to one of the preceding claims, characterized in that the respective four lowest-order outputs (A00, B00, C00, D00) of the four decoding stages, the four second-lowest (A01, B01, C01, D01), the four second-highest (A10, B10, C10, D10) and the four highest-order outputs (A11, B11, C11, D11) are connected to the inputs of in each case one NOR element (NOR1, 2, 3, 4), the outputs of which are logically combined by a NAND element (ND).

**Revendications**

1. Montage pour classer et enregistrer par ordre de priorité des sections individuelles ou des blocs individuels de mémoire d'un dispositif de mémoire, moyennant l'utilisation des données de priorité, qui sont associées aux sections individuelles ou aux blocs individuels de mémoire et qui sont préparées dans une mémoire de priorités, comportant des circuits logiques de coïncidence et de non-coïncidence (circuits logiques Hit et Miss), servant à évaluer ou à produire des signaux de coïncidence ou de coup au but (Hit) et/ou des signaux de non-coïncidence ou d'accès erroné (coup manqué -Miss), ainsi que moyennant l'utilisation telle d'un algorithme de remplacement LRU que, dans le cas d'un accès réussi à un bloc dont la priorité passe en première position alors que d'autres blocs, à la priorité se situant avant celle de ce bloc, rétrogradent d'une position, et que, lorsque la mémoire est pleine et que l'accès est infructueux, une mémorisation d'autres données est réalisée dans la section de mémoire, aux données de laquelle aucun accès n'a été réalisé depuis le plus longtemps, la priorité de cette section de mémoire passant de la dernière position à la première position, caractérisé par le fait que les mémoires de priorités (PS-A, ... PS-D), associées respectivement à l'un de quatre blocs de mémoire, ou les registres de priorités (LRU-AX, LRU-AY, ..., LRU-DX, LRU-DY), branchés respectivement en aval, sont raccordés, côté sortie, aux entrées d'un circuit logique Miss (ML-A, ..., ML-D) rapporté au bloc respectif, les autres entrées de ce circuit recevant le signal de coup manqué (MISS) et les signaux de priorités intermédiaires, qui apparaissent dans les circuits logiques Miss des trois autres blocs de mémoire respectifs et sont des signaux (MB00, MC00, MD00, ...) correspondant à la priorité la plus faible, des signaux (MB01, MC01, MD01 ...) correspondant à la priorité la plus faible en second et les signaux (MB10, MC10, MD10 ...) correspondant à la priorité la plus élevée en second, de ces trois blocs de mémoire, que les signaux de priorités intermédiaires de l'ensemble des quatre circuits logiques Miss sont combinés par l'intermédiaire de circuits ou respectifs (OGA) pour former des signaux respectifs d'accès erronés (MISS-A, ..., MISS-D), que chacun des quatre signaux d'accès erronés (MISS-A, ..., MISS-D) est envoyé à une première entrée respective d'un multiplexeur respectif (MUX-A, ..., MUX-D), dont la seconde entrée reçoit respectivement un signal de coup au but (MTCH-A, ..., MTCH-D) spécifique au bloc et apparaissant sur le côté processeur, et dont la sortie est reliée, d'une part, directement (HIt-A, ..., HIT-D), et, d'une part, d'une manière inversée (HIT-A, ..., HIT-D) à une entrée respective du circuit logique Hit (HL-A, ..., HL-D) associé au bloc respectif, que les sorties des registres de priorités (LRU-AX, LRU-AY, ..., LRU-DX, LRU-DY) qui contiennent respectivement deux bits de priorité sont reliés respectivement aux entrées d'un étage de décodage (DEK-A, ..., DEK-D) rapporté au bloc et dont les quatre sorties (A00, A01, A10, A11, ..., D00, D01, D10, D11), associées respectivement à des valeurs de priorités différentes, sont reliés à d'autres entrées du circuit logique Hit (HL-A, ..., HL-D) associé au bloc considéré,

que d'autres entrées de ces circuits logiques Hit (HL-A, ..., HL-D) sont reliées aux sorties (B00, C00, D00, B11, C11, D11, ..., A00, B00, C00, A11, B11, C11), associées respectivement à une valeur de priorité faible et à une valeur de priorité la plus élevée, des étages décodeurs (DEK-B, C, D, ..., DEK-A, B, C) des trois autres blocs respectifs de mémoire et aux sorties (HIT-B, HIT-C, HIT-D, ..., HIT-A, HIT-B, HIT-C) des multiplexeurs (MUX-A, ..., MUX-D) branchés en aval des circuits logiques Miss (ML-B, ML-C, ML-D, ..., ML-A, ML-B, ML-C) des trois autres blocs de mémoire respectifs, et

que les deux sorties (L-AX, L-AY, ..., L-DX, L-DY) des bits de priorité de chaque circuit logique Hit (HL-A, ..., HL-D) sont reliées aux entrées des mémoires de priorités associées (PS-A, ..., PS-D).

2. Montage suivant la revendication 1, caractérisé par le fait que chaque circuit logique Miss rapporté au bloc est constitué par quatre circuits ET (UG1, UG2, UG3, UG4), produisant respectivement l'un des quatre signaux de priorités intermédiaires (MA00, MA01, MA10, MA11) et combinés entre eux côtés sortie par l'intermédiaire de ladite porte OU (OGA), que chacune des entrées associées respectivement, pour chaque circuit ET, aux deux bits de priorité (LRU-AX, LRU-AY) est branchée avec ou sans inversion, en fonction des quatre valeurs de priorités différentes, qu'à une entrée respective des quatre circuits ET (UG1, 2, 3, 4) est envoyé le signal d'accès manqué (MISS) apparaissant dans le cas d'un accès manqué à la mémoire, que d'autres entrées des circuits ET (UG2, UG4), qui produisent les signaux de priorités intermédiaires (MA01, MA11), qui correspondent respectivement à la priorité la plus faible en second et à la priorité la plus élevée, sont reliés aux sorties des circuits ET, qui produisent les signaux de priorités intermédiaires (MB00, MC00, MD00) correspondant à la priorité la plus faible, des circuits logiques Miss associés aux trois autres blocs respectifs de mémoire, que d'autres entrées des circuits ou portes ET (UG3, UG4) qui produisent les signaux de priorités intermédiaires (MA10, MA11) qui correspondent à la priorité la plus élevée en second et à la priorité la plus élevée, sont reliées aux sorties des circuits ET qui produisent les signaux de priorités intermédiaires (MB01, MC01, MD01) possédant la priorité la plus basse en second, et qui sont associés respectivement à trois autres blocs et mémoire, et que d'autres entrées du circuit logique ET (UG4), qui produit le signal de priorité intermédiaire (MA11) possédant la priorité la plus élevée sont reliées aux sorties des circuits ET, qui produisent les signaux de priorités intermédiaires (MB10, MC10, MD10) correspondant à la priorité la plus élevée en second, des circuits logiques Miss associés respectivement aux trois autres blocs de mémoire.

3. Montage suivant la revendication 2, caractérisé par le fait qu'en amont de chaque circuit logique Miss (ML-A, ..., ML-D) est branché respectivement un circuit de blocage (DAL-A, ..., DAL-D), qui signale d'éventuelles limitations d'accès (DISABL-A, ..., DISABL-D).

4. Montage suivant la revendication 3, caractérisé par le fait que la sortie (DSABL-A) du circuit de blocage est reliée à une entrée respective des quatre circuits ET (UG1, 2, 3, 4) du circuit logique Miss associé (ML-A).

5. Montage suivant l'une des revendications précédentes, caractérisé par le fait que le circuit logique Hit associé respectivement à un bloc de mémoire est constitué, côté entrée, par plusieurs circuits ET (UG11, ..., UG18), que les deux premiers circuits ET (UG11, UG12) sont reliés respectivement, par l'intermédiaire d'une première entrée, à la sortie de poids faible (A00) ou à la sortie de poids le plus élevé (A11) de l'étage de décodage (DEK-A) associé au bloc et sont reliés respectivement, par l'intermédiaire d'une seconde entrée à la sortie négativée (HIT-A) du multiplexeur (MUX-A) branché en aval du circuit logique Miss (ML-A) associé au bloc, que trois seconds circuits ET (UG13, UG14, UG15) sont reliés par l'intermédiaire de leurs premières entrées respectives à la sortie (A10), possédant le poids le plus élevé en second, de l'étage décodeur et par l'intermédiaire de leurs secondes ou troisièmes entrées respectives, à la sortie (B11, C11, D11), possédant le poids le plus élevé, des étages décodeurs associés respectivement à l'un des trois autres blocs de mémoire ou aux sorties (HIT-B, HIT-C et HIT-D) des multiplexeurs associées respectivement à ces blocs de mémoire, que trois troisièmes circuits ET (UG16, UG17, UG18) sont raccordés par l'intermédiaire de leurs premières entrées respectives à la sortie (A01), qui possède le poids le plus faible en second, de l'étage décodeur associé au bloc et par leurs secondes ou troisièmes entrées respectives à la sortie (B00, C00, D00), qui possède respectivement le poids le plus faible, des étages décodeurs associés respectivement à l'un des trois autres blocs de mémoire ou aux sorties (HIT-B, HIT-C, HIT-D) du multiplexeur, associées respectivement à ces blocs de mémoire, que les sorties de tous les circuits ET (UG11, ..., UG18) sont reliées aux entrées d'un premier circuit OU (OGX), dont la sortie négativée est associée au bit de priorité de poids le plus faible (LA-X), et que les sorties des trois seconds circuits ET (UG13, UG14, UG15) sont reliées, conjointement avec la sortie (HIT-A) du multiplexeur rapporté au bloc et avec la sortie de poids le plus élevé (A11) de l'étage décodeur rapporté au bloc, à une entrée d'un second circuit OU (OGY), dont la sortie est associée au bit de priorité de poids le plus élevé (L-AY).

6. Montage suivant l'une des revendications précédentes, caractérisé par le fait que les quatre sorties respectives de poids le plus faible (A00, B00, C00, D00) des quatre étages décodeurs, les quatre sorties de poids le plus faible en second (A01, B01, C01, D01), les quatre sorties de poids le plus élevé en second (A10, B10, D10) et les quatre sorties de poids le plus élevé (A11, B11, C11, D11), sont reliées aux sorties d'une porte NON-OU (NOR1, 2, 3, 4), dont les sorties sont combinées entre elles par l'intermédiaire d'une porte NON-ET (ND).

# FIG 1

# FIG 2

# FIG 3

# F IG 4